# EUROPÄISCHE PATENTSCHRIFT

(11) **EP 0 436 755 B1**
(45) Veröffentlichungstag und Bekanntmachung des Hinweises auf die Patenterteilung: **07.12.1994**
(21) Anmeldenummer: 90100353.3
(22) Anmeldetag: 09.01.1990
(51) Int. Cl.: A01K 5/00, A23N 17/00, A01D 33/08, B26D 7/06

(54) **Vorrichtung zum Reinigen und Schnitzeln von Rüben od. dgl.**
Apparatus for cleaning and cutting roots or similar
Apparail pour le nettoyage et le coupe de betteraves ou similaires

(43) Veröffentlichungstag der Anmeldung: 17.07.1991
(73) Patentinhaber: De Dissel Beheer B.V., NL-7122 AA Aalten (NL)
(72) Erfinder: Ansink, J.C., NL-7122 AA Aalten (NL)
(74) Vertreter: Schulze Horn, Stefan, Dipl.-Ing. M.Sc.

(56) Entgegenhaltungen:
- EP-A- 0 170 732
- DE-U- 8 801 587
- GB-A- 1 512 206
- GB-A- 2 008 442
- US-A- 3 329 263
- Prospekt der Firma STRIMECH "Rootcrop chopper feed bucket with cleaner 383/5"

## Beschreibung

Die Erfindung betrifft eine Vorrichtung zum Reinigen und Schnitzeln von Futterfrüchten, wie Rüben, Kartoffeln oder Möhren, zum Anbau an ein Zugfahrzeug, mit einem schwenkbaren und sich konisch nach unten verjüngenden Behälter zur Aufnahme der Futterfrüchte, wobei im tiefsten Teil des Behälters in Flucht miteinander mindestens eine Reinigungstrommel und mindestens ein Schnitzelwerk auf einer drehantreibbaren Welle angeordnet sind und wobei im Behälter zwischen der Reinigungstrommel und dem Schnitzelwerk eine senkrecht zur Längsachse der Welle verlaufende Trennwand angeordnet ist.

Aus dem Prospekt der Firma STRIMECH "Rootcrop chopper feed bucket with cleaner 383/5" ist eine Vorrichtung der eingangs genannten Art bekannt. Wie aus den in diesem Dokument enthaltenen Zeichnungen ersichtlich ist, ist zwar zwischen der Reinigungstrommel und dem Schnitzelwerk eine Trennwand vorgesehen, jedoch reicht diese nicht nach oben hin über die Reinigungstrommel hinaus in den Innenraum des Behälters. Der Behälterinnenraum ist deshalb nicht unterteilt oder unterteilbar in einen Reinigungsteil und einen Schnitzelteil. Auch besitzt diese bekannte Vorrichtung unterhalb des Behälters keine Mittel zum Auffangen des beim Reinigungsvorgang der Futterfrüchte herabfallenden Schmutzes. Nachteilig ist demnach bei dieser bekannten Vorrichtung, daß einerseits ein Teil der Futterfrüchte ungereinigt geschnitzelt wird, wodurch Schmutzanteile im geschnitzelten Futter verbleiben, und daß andererseits der beim Reinigungsvorgang herabfallende Schmutz frei nach unten aus der Vorrichtung herausfällt, was bei einem Einsatz der Vorrichtung innerhalb von Stallgängen eine nachträgliche Reinigung erforderlich macht. Auch ist ein Einsatz der Vorrichtung in Fahrsilos wegen des herabfallenden Schmutzes, der in das zu silierende Futter fällt, nicht möglich.

Das Dokument DE-U-8801587 zeigt eine Vorrichtung zum Reinigen und Schnitzeln von Rüben, bei welcher in einem Behälter hinter einer Beschickungsöffnung nacheinander eine oder mehrere getriebene Reinigungswellen, ein feststehendes Leitblech und eine getriebene Zerkleinerungswelle mit einer feststehenden Gegenleiste vorgesehen sind. Unterhalb des Behälters ist wahlweise eine Schmutzauffangwanne vorgesehen. Zwar wird bei dieser Vorrichtung ein Herausfallen von Schmutz nach unten während des Reinigungsvorganges vermieden, jedoch ist es hier nicht möglich, den Reinigungsteil der Vorrichtung vom Schnitzelteil zu trennen, um zunächst für eine wählbare Zeit die Futterfrüchte einer Reinigung zu unterziehen und erst nach einem ausreichenden Reinigungseffekt dem Schnitzelteil zuzuführen.

Es stellt sich daher die Aufgabe, eine Vorrichtung zum Reinigen und Schnitzeln von Futterfrüchten zu schaffen, bei der eine bessere Trennung zwischen Schmutzanteilen und Futteranteilen erreichbar ist.

Die Lösung dieser Aufgabe gelingt erfindungsgemäß mit einer Vorrichtung der eingangs genannten Art, welche dadurch gekennzeichnet ist, daß der Behälter im Bereich unterhalb der Reinigungstrommel mindestens eine Schmutzfangwanne aufweist und daß die Trennwand im Bereich oberhalb der Welle geöffnet und/oder entfernt werden kann, womit der Innenraum des Behälters in einen der Reinigungstrommel zugeordneten Reinigungsteil und einen dem Schnitzelwerk zugeordneten Schnitzelteil unterteilbar ist.

Vorteilhaft wird bei der erfindungsgemäßen Vorrichtung erreicht, daß einerseits eine Verschmutzung von Futter oder Stallgang vermieden wird und daß andererseits sämtliche Futterfrüchte zunächst im Reinigungsteil der Vorrichtung ausreichend lange behandelt werden können, bevor sie dem Schnitzelteil der Vorrichtung zugeführt werden.

Vorteilhafte Ausgestaltungen und Weiterbildungen der Erfindung sind in den abhängigen Ansprüchen angegeben.

Ein Ausführungsbeispiel der Vorrichtung wird im folgenden anhand einer Zeichnung näher erläutert. Die Figuren der Zeichnung zeigen:
- Figur 1: eine Vorrichtung zum Reinigen und Schnitzeln von Futterfrüchten in einer Ansicht von vorne, in Richtung des Pfeils I in Figur 2,
- Figur 2: dieselbe Vorrichtung in Seitenansicht, in Richtung des Pfeils II in Figur 1,
- Figur 3: eine Reinigungstrommel und ein Schnitzelwerk als Teile der Vorrichtung in Draufsicht,
- Figur 4: dieselbe Reinigungstrommel im Vertikalschnitt entlang der Linie IV - IV in Figur 3 und
- Figur 5: das Schnitzelwerk im Vertikalschnitt entlang der Linie V - V in Figur 3.

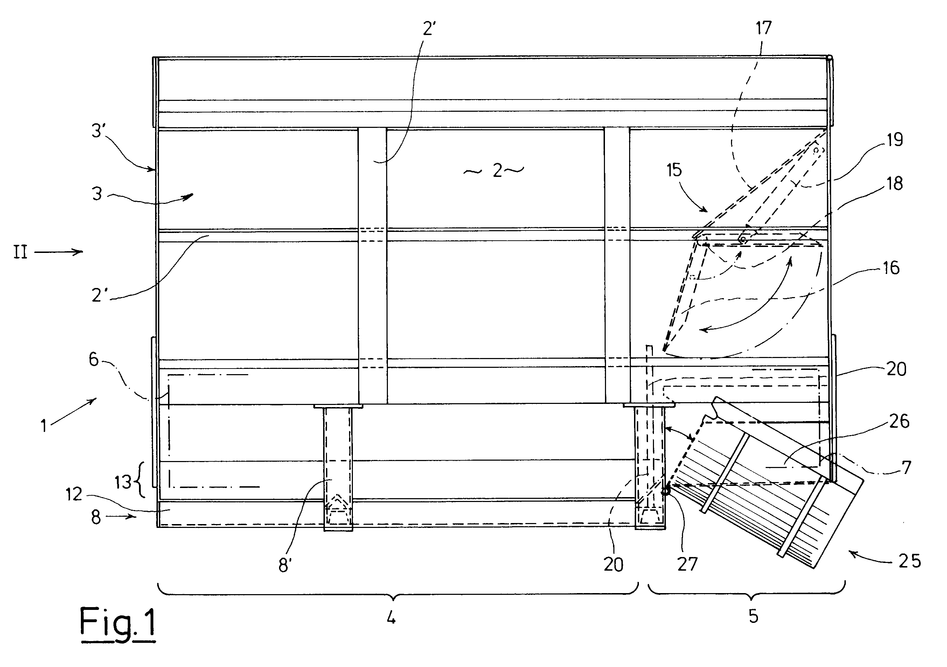

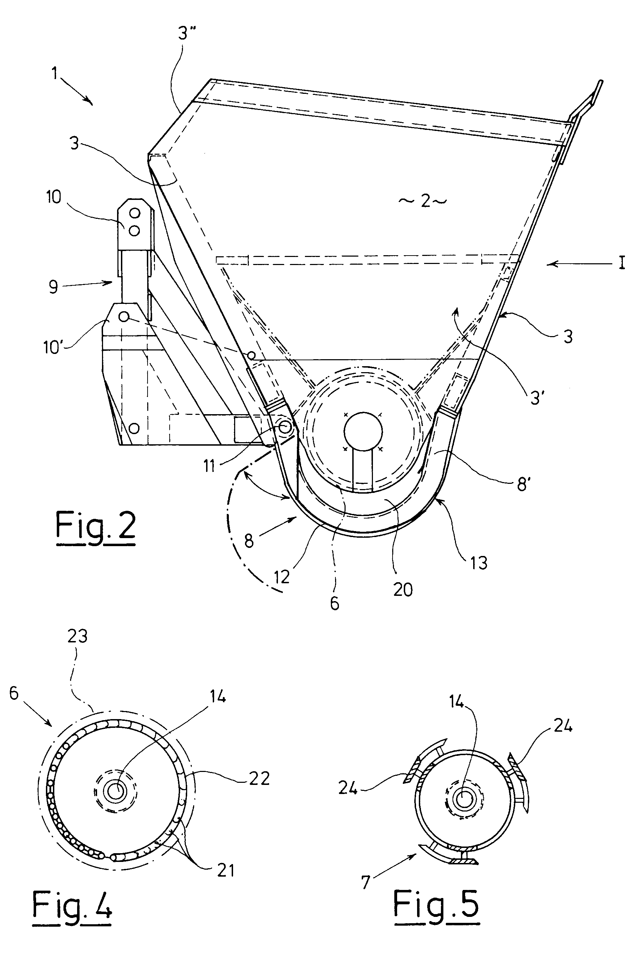

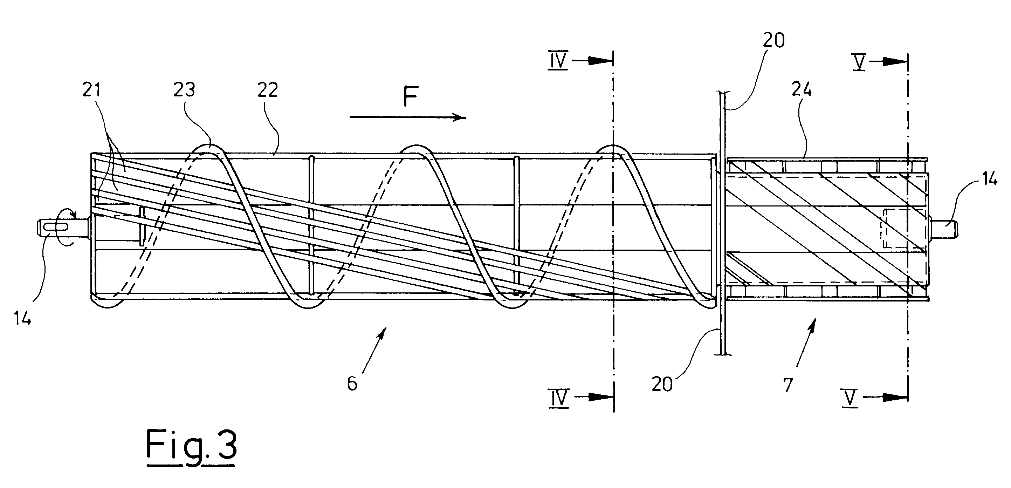

Wie aus den Figuren 1 und 2 hervorgeht, besteht das dargestellte Ausführungsbeispiel der Vorrichtung 1 zum Reinigen und Schnitzeln von Futterfrüchten im wesentlichen aus einem Behälter 2, welcher aus zwei rechteckigen Seitenwänden 3 und zwei im wesentlichen trapezförmigen Seitenwänden 3' besteht. Zur Verstärkung der eckigen Seitenwände 3 sind horizontal verlaufende sowie senkrecht dazu angeordnete Streben 2' vorgesehen.

Aus Figur 1 ist ersichtlich, daß die Vorrichtung 1 ferner einen Reinigungsteil 4 und einen schnitzelteil 5 aufweist. Eine im unteren Bereich des Reinigungsteils 4 angeordnete Reinigungstrommel 6 sowie ein im unteren Bereich des Schnitzelteils 5 angeordnetes Schnitzelwerk 7 bilden den Bodenbereich 8 des sich konisch nach unten verjüngenden Behälters 2.

Aus Figur 2 geht ferner hervor, daß der Behälter 2 mit einem Rahmen 9 verbunden ist. Der Rahmen 9 weist drei Anschlaglaschen 10, 10' auf, die zur Verbindung der Vorrichtung 1 mit einer Dreipunkt-Kupplung eines Traktors oder eines anderen Zugfahrzeuges dienen.

Die Verbindung von Behälter 2 und Rahmen 9 erfolgt über eine Schwenkachse 11, die es erlaubt, mit Hilfe einer nicht dargestellten Zylinder-Kolben-Anordnung den Behälter 2 so weit vom Rahmen 9 weg zu verschwenken, daß die in Figur 2 rechte Seitenwand 3 eine im wesentlilchen horizontale Stellung einnimmt. Auf diese Weise kann der Behälter 2 als Ladeschaufel eingesetzt werden, um aus einem Haufen von Futterfrüchten durch entsprechendes Rangieren eine ausreichende Menge in den Behälter 2 aufzunehmen.

Aus Figur 2 geht weiter hervor, daß die linke Seitenwand 3 durch eine oben aufgesetzte und zum Behälterinneren hin abgewinkelte Seitenwand 3'' verlängert ist. Auf die-se Weise wird vermieden, daß beim Zurückschwenken des Behälters 2 in die Arbeitsstellung Futterfrüchte über die hintere, in Figur 2 linke Seitenwand 3 aus dem Behälter 2 herausfallen können.

Weiterhin weist der Behälter 2 im Bereich unterhalb der Reinigungstrommel 6 eine Schmutzfangwanne 12 auf. Um die Gesamtbaugröße der Vorrichtung 1 nicht zu sehr zu vergrößern, ist die Größe der Schmutzfangwanne 12 so gewählt, daß sie zur Aufnahme der bei einem Reinigungs- und Schnitzelvorgang anfallenden Schmutzanteile ausreicht. Dazu ist es notwendig, daß die Schmutzfangwanne 12 entleerbar ausgeführt ist. Im dargestellten Ausführungsbeispiel erfolgt die Entleerung der Schmutzfangwanne 12 durch eine Schmutzauslaßöffnung 13 mittels Schwenkens des Behälters 2 um die Schwenkachse 11. Es ist jedoch auch denkbar, daß die Schmutzfangwanne nach unten aufklappbar ausgebildet ist, wie dies in Figur 2 strichpunktiert angedeutet ist.

Da im dargestellten Ausführungsbeispiel die Reinigungstrommel 6 und das Schnitzelwerk 7 in Verlängerung zueinander angeordnet sind, ist es für eine einfache und wartungsarme Konstrution vorteilhaft , daß die Reinigungstrommel 6 und das Schnitzelwerk 7 von derselben Antriebswelle 14 angetrieben werden. Der eigentliche Antrieb solcher Vorrichtungen zum Reinigen und Schnitzeln von Futterfrüchten ist für sich bekannt; er erfolgt entweder über einen Zapfwellenanschluß durch einen Traktor oder hydraulisch mittels eines Hydraulikmotors, wie hier nicht näher dargestellt zu werden braucht.

Wie weiter oben bereits erwähnt worden ist, ist die Vorrichtung 1 so ausgestaltet, daß die Futterfrüchte zunächst nur dem Reinigungsteil 4 des Behälters 2 und erst nach erfolgter Reinigung dem Schnitzelteil 5 des Behälters 2 zugeführt werden. Dazu ist vorgesehen, daß zwischen dem Reinigungsteil 4 und dem Schnitzelteil 5 eine Trennwand 15, 20 vorgesehen ist. Diese Trennwand 15, 20 hält die vom Behälter 2 aufgenommenen Futterfrüchte zunächst auf der Reinigungstrommel 6, wo in bekannter Weise die Reinigung erfolgt. Nach einem vorgegebenen oder frei bestimmten Zeitraum ist der Reinigungsvorgang abgeschlossen und die Futterfrüchte können dem Schnitzelwerk 7 zugeführt werden. Dazu ist vorgesehen, daß die Trennwand 15, 20 im Bereich 15 oberhalb von Reinigungstrommel 6 bzw. Schnitzelwerk 7 geöffnet und/oder entfernt werden kann. Im dargestellten Ausführungsbeispiel besteht der obere Bereich 15 der Trennwand 15, 20 aus einer Schwenkklappe 16, welche mit einem Leitblech 17 durch eine Schwenkachse 18 verbunden ist. Das Leitblech 17 verläuft in oberer Verlängerung der Schwenkklappe 16 schräg aufwärts zur benachbarten Seitenwand 3' des Behälters 2 und deckt den Schnitzelteil 5 des Behälters 2 oberseitig ab. Nach erfolgtem Reinigungsvorgang wird durch eine in Figur 1 strichpunktiert eingezeichnete Zylinder-Kolben-Anordnung 19 die Schwenkklappe 16 unter das Leitblech 17 geschwenkt, so daß die sich oberhalb der Reinigungstrommel 6 befindlichen gereinigten Futterfrüchte zum Schnitzelwerk 7 gelangen können.

Für eine saubere Trennung von Schmutz- und Futteranteil ist es weiterhin vorgesehen, daß die Trennwand 15, 20 auch im Bereich der Antriebswelle 14 den Reinigungsteil 4 vom Schnitzelteil 5 trennt. Dazu ist in diesem Bereich unterhalb sowie auf beiden Seiten und oberhalb der Antriebswelle der untere Teil 20 der Trennwand 15, 20 vorgesehen, welcher die unterhalb der Reinigungstrommel 6 und des Schnitzelwerks 7 liegenden Behälterbereiche vollständig gegeneinander abtrennt, um ein Austreten von anfallendem Schmutz in den Schnitzelteil 5 zu vermeiden, und welcher außerdem noch oberhalb der Reinigungstrommel 6 und des Schnitzelwerks 7 eine niedrige Trennstufe bildet, die während des Reinigungsvorganges losen Schmutz vom Schnitzelwerk 7 fernhält, die aber während des Schnitzelvorganges von den zugeförderten Futterfrüchten leicht überwindbar ist.

Damit die Reinigungstrommel neben der Reinigungsfunktion auch eine Förderfunktion übernehmen kann, um die Futterfrüchte dem Schnitzelwerk 7 zuzuführen, weist die Reinigungstrommel 6 einen aus einer Mehrzahl von im Abstand und im wesentlichen parallel zueinander angeordneten Stäben 21 bestehenden Trommelmantel 22 auf. Diese Stäbe 21 verlaufen, wie aus Figur 3 ersichtlich ist, unter einem relativ flachen Winkel zur Längsrichtung der Reinigungstrommel 6 und bewirken dadurch eine Förderung in Förderrichtung F bei Drehung der Welle 14 in dem durch den eingezeichneten Drehpfeil angegebenen Drehsinn. Durch den Abstand der Stäbe 21 zueinander wird einerseits eine Rotation der aufliegenden Futterfrüchte erreicht und andererseits die notwendige "Siebwirkung" zum Ableiten der Schmutzanteile gewährleistet.

Zur Erhöhung der Förderwirkung ist vorgesehen, daß die Reinigungstrommel 6 zusätzlich einen Fördersteg 23 aufweist, der ihren Trommelumfang im dargestellten Ausführungsbeispiel nach Figur 3 mehrfach wendelförmig umschlingt. Zur einfachen und billigen Herstellung der Reinigungstrommel 6 ist es möglich, daß als Stäbe 21 und/oder Förderstege 23 Baustahlstäbe verwendet werden. Die Verwendung von Rundstäben ist zweckmäßig, um eine vorzeitige Beschädigung der Futterfrüchte zu vermeiden, die eventuell ein Verklemmen der Reinigungstrommel zur Folge hätte. Auch wenn in Figur 3 nur ein Teil der auf dem Trommelumfang der Reinigungstrommel 6 angeordneten Stäbe 21 eingezeichnet ist, ist selbstverständlich der gesamte Trommelumfang mit Stäben 21 bedeckt, wie besonders deutlich aus dem Querschnitt nach Figur 4 hervorgeht.

Besonders für die Stallfütterung ist es von Vorteil, daß das Schnitzelwerk 7 an einer Seite des Behälters 2 angeordnet ist. Auf diese Weise kann das Schnitzelfutter direkt aus dem Behälter 2 in einen Futtertrog gelangen. Zur genauen Führung des durch die am Schnitzelwerk 7 umlaufend angeordneten Messer 24 (Figur 5) zerschnitzelten Futters und zum Erreichen einer definierten Öffnung 25 im Behälter 2 ist vorgesehen, daß der Behälter 2 unterhalb des Schnitzelwerkes 7 eine Schnitzelrutsche 26 aufweist, welche besonders vielseitig einsetzbar ist, wenn sie verschwenkbar und/oder verdrehbar am Behälter 2 gehaltert ist. Im dargestellten Ausführungsbeispiel nach Figur 1 ist die Schnitzelrutsche 26 um eine Schwenkachse 27 schwenkbar am Behälter 2 angebracht.

Um auch den weiter oben beschriebenen Einsatz in Zusammenhang mit einem Fahrsilo durchführen zu können, ist es vorteilhaft, daß die Schnitzelrutsche 26 demontierbar am Behälter 2 gehalten ist. Dies kann im dargestellten Ausführungsbeispiel durch einfaches Herausziehen der Schwenkachse 27 aus nicht näher dargestellten Lagern erfolgen, so daß das Schnitzelgut aus dem Behälter 2 unmittelbar in den darunter befindlichen Fahrsilo gelangen kann.

Schließlich ist vorgesehen, daß die jeweils zu einem Schnitzelwerk 7 gehörende Schwenkklappe 16 und die zugehörige Schnitzelrutsche 26 mechanisch miteinander gekoppelt sind, wobei die Mittel für diese Kopplung hier nicht eigens dargestellt sind. Eine solche Kopplung ist vorteilhaft, da die Schnitzelrutsche 26 als Leitelement nur dann benötigt wird, wenn auch das Schnitzelwerk 7 mit Futterfrüchten beschickt wird. Zweckmäßig ist die Kopplung also derart, daß bei nach oben verschwenkter Schwenkklappe 16, d.h. bei Schnitzelbetrieb, die Schnitzelrutsche 26 mit ihrem äußeren Ende nach unten verschwenkt ist, und umgekehrt.

## Patentansprüche

1. Vorrichtung zum Reinigen und Schnitzeln von Futterfrüchten, wie Rüben, Kartoffeln oder Möhren, zum Anbau an ein Zugfahrzeug, mit einem schwenkbaren und sich konisch nach unten verjüngenden Behälter (2) zur Aufnahme der Futterfrüchte, wobei in tiefsten Teil des Behälters (2) in Flucht miteinander mindestens eine Reinigungstrommel (6) und mindestens ein Schnitzelwerk (7) auf einer drehantreibbaren Welle (14) angeordnet sind und wobei im Behälter (2) zwischen der Reinigungstrommel (6) und dem Schnitzelwerk (7) eine senkrecht zur Längsachse der Welle (14) verlaufende Trennwand (15, 20) angeordnet ist,
dadurch gekennzeichnet,
daß der Behälter (2) im Bereich unterhalb der Reinigungstrommel (6) mindestens eine Schmutzfangwanne (12) aufweist und daß die Trennwand (15, 20) im Bereich (15) oberhalb der Welle (14) geöffnet und/oder entfernt werden kann, womit der Innenraum des Behälters (2) in einen der Reinigungstrommel (6) zugeordneten Reinigungsteil (4) und einen dem Schnitzelwerk (7) zugeordneten Schnitzelteil (5) unterteilbar ist.

2. Vorrichtung nach Anspruch 1, dadurch gekennzeichnet, daß die Trennwand (15, 20) im Bereich (15) oberhalb der Welle (14) als Schwenkklappe (16) ausgebildet ist, die zwischen einer den Reinigungsteil (4) vom Schnitzelteil (5) trennenden Trennstellung und einer einen Übergang von Futterfrüchten vom Reinigungsteil (4) in den Schnitzelteil (5) gestattenden Freigabestellung verschwenkbar ist.

3. Vorrichtung nach Anspruch 1 oder 2, dadurch gekennzeichnet, daß die Schwenkklappe (16) durch eine Zylinder-Kolben-Anordnung (19) betätigbar ist.

4. Vorrichtung nach einem der Ansprüche 1 bis 3, dadurch gekennzeichnet, daß in oberer Verlängerung der Schwenkklappe (16) ein schräg aufwärts zur benachbarten Seitenwand (3') des Behälters (2) verlaufendes und den Schnitzelteil (5) des Behälters (2) oberseitig abdeckendes Leitblech (17) vorgesehen ist.

5. Vorrichtung nach einem der Ansprüche 1 bis 4, dadurch gekennzeichnet, daß ein einzelnes Schnitzelwerk (7) an dem einen Ende der Welle (14) vorgesehen ist oder daß zwei Schnitzelwerke (7) vorgesehen sind, wovon je eines an jedem Ende der Welle (14) angeordnet ist.

6. Vorrichtung nach einem der Ansprüche 1 bis 5, dadurch gekennzeichnet, daß der Behälter (2) unterhalb jedes Schnitzelwerkes (7) je eine Schnitzelrutsche (26) aufweist.

7. Vorrichtung nach Anspruch 6, dadurch gekennzeichnet, daß die Schnitzelrutsche (26) verschwenkbar und/oder verdrehbar am Behälter (2) gehaltert ist.

8. Vorrichtung nach Anspruch 6 oder 7, dadurch gekennzeichnet, daß die Schnitzelrutsche (26) demontierbar am Behälter (2) gehaltert ist.

9. Vorrichtung nach einem der Ansprüche 6 bis 8, dadurch gekennzeichnet, daß die jeweils zu einem Schnitzelwerk (7) gehörende Schwenkklappe (16) und die entsprechende Schnitzelrutsche (26) miteinander gekoppelt betätigbar sind.

## Claims

1. Apparatus for cleaning and cutting roots like turnips, potatos and carrots to be attached to a towing vehicle, comprising a pivotable container (2) conically tapered downwards for receiving roots or similar wherein in the most downward part of the container (2) at least one cleaning drum (6) and at least one cutting mechanism (7) are lined up on a rotatable spindle (14), and wherein in the container (2) between the cleaning drum (6) and the cutting mechanism (7) a dividing wall (15, 20) is arranged with the dividing wall extending vertically to the longitudinal axis of the spindle (14),
**characterized in,**
that the container (2) comprises at least one dirt collecting pan (12) in the area below the cleaning drum (6), and that the dividing wall (15, 20) is to be opened and/or removed in the area (15) above the spindle (14) whereby the interior of the container (2) is to be divided into a cleaning part (4) associated with the cleaning drum (6) and a cutting part (5) associated with the cutting mechanism (7).

2. Apparatus according to claim 1, characterized in that the dividing wall (15, 20) is designed as a swing valve (16) in the area (15) above the spindle (14) with the swing valve pivotable between a dividing position dividing the cleaning part (4) and a release position enabling a transfer of roots or similar from the cleaning part (4) into the cutting part (5).

3. Apparatus according to claim 1 or 2, characterized in that the swing valve (16) is operable by a piston-cylinder-unit (19).

4. Apparatus according to one of the claims 1 to 3, characterized in that a guide plate (17) is provided with the guide plate extending angularly upwards as an upper extension of the swing valve (16) up to an adjacent side wall (3') of the container (2) and covering the cutting part (5) of the container (2) at the upper side.

5. Apparatus according to one of the claims 1 to 4, characterized in that a single cutting mechanism (7) is provided at the one end of the spindle (14), or that two cutting mechanisms (7) are provided each arranged at the respective ends of the spindle (14).

6. Apparatus according to one of the claims 1 to 5, characterized in that the container (2) comprises a cutting chute (26) below each cutting mechanism (7).

7. Apparatus according to claim 6, characterized in that the cutting chute (26) is pivotably and/or rotatably secured at the container (2).

8. Apparatus according to claim 6 or 7, characterized in that the cutting chute (26) is detachably secured at the container (2).

9. Apparatus according to one of the claims 6 to 8, characterized in that the swing valve (16) associated with a cutting mechanism (7) and the corresponding cutting chute (26) are operable with coupled with each other.

## Revendications

1. Dispositif pour le nettoyage et la coupe de plantes fourragères, telles que betteraves, pommes de terre ou carottes, destiné à être rapporté sur un véhicule de traction et comprenant un conteneur (2) pivotant, se rétrécissant en cône vers le bas pour recevoir les plantes fourragères, au moins un tambour de nettoyage (6) et au moins un mécanisme de coupe (7) étant disposés en enfilade sur un arbre (14) pouvant être entraîné en rotation, dans la partie la plus basse du conteneur (2) et une paroi de séparation (15, 20) perpendiculaire à l'axe longitudinal de l'arbre (14) étant disposée dans le conteneur (2) entre le tambour de nettoyage (6) et le mécanisme de coupe (7), caractérisé en ce que le conteneur (2) présente au moins une cuve de collecte de déchets (12) dans la zone située sous le tambour de nettoyage (6) et que la paroi de séparation (15, 20) peut être ouverte et/ou enlevée dans la zone (15) située au-dessus de l'arbre (14), l'espace intérieur du conteneur (2) étant ainsi subdivisé en une section de nettoyage (4) associée au tambour de nettoyage (6) et en une section de coupe (5) associée au mécanisme de coupe (7).

2. Dispositif selon la revendication 1, caractérisé en ce que la paroi de séparation (15, 20) est réalisée dans la zone (15) située au-dessus de l'arbre (14), sous forme de volet pivotant (16) qui peut pivoter entre une position de séparation séparant la section de nettoyage (4) de la section de coupe (5) et une position d'ouverture permettant le passage de plantes fourragères de la section de nettoyage (4) dans la section de coupe (5).

3. Dispositif selon la revendication 1 ou 2, caractérisé en ce que le volet pivotant (16) peut être actionné par un agencement cylindre-piston (19).

4. Dispositif selon l'une des revendications 1 à 3, caractérisé en ce qu'il est prévu dans le prolongement supérieur du volet pivotant (16), une tôle de guidage (17) inclinée vers le haut en direction de la paroi latérale (3') voisine du conteneur (2) et recouvrant en haut la section de coupe (5) du conteneur (2).

5. Dispositif selon l'une des revendications 1 à 4, caractérisé en ce qu'il est prévu un unique mécanisme de coupe (7) à l'une des extrémités de l'arbre (14) ou en ce que deux mécanismes de coupe (7) sont prévus, un mécanisme étant disposé à chaque extrémité de l'arbre (14).

6. Dispositif selon l'une des revendications 1 à 5, caractérisé en ce que le conteneur (2) présente une goulotte (26) sous chaque mécanisme de coupe (7).

7. Dispositif selon la revendication 6, caractérisé en ce que la goulotte (26) est montée sur le conteneur (2) de manière à pouvoir pivoter et/ou tourner.

8. Dispositif selon la revendication 6 ou 7, caractérisé en ce que la goulotte (26) peut être démontée du conteneur (2).

9. Dispositif selon l'une des revendications 6 à 8, caractérisé par le fait que le volet pivotant (16) faisant partie d'un mécanisme de coupe (7) et la goulotte (26) correspondant peuvent être actionnés en étant couplés entre eux.
